# EUROPEAN PATENT APPLICATION

(11) **EP 4 414 330 A1**
(43) Date of publication of application: **14.08.2024**
(21) Application number: 21959924.8
(22) Date of filing: 07.10.2021
(51) Int. Cl.: C01G 45/02, B01J 23/889, C01G 45/12

(54) **METAL OXIDE HAVING SPINEL-TYPE CRYSTAL STRUCTURE, METHOD FOR PRODUCING SAME, CARBON DIOXIDE REDUCTION METHOD, AND CARBON DIOXIDE REDUCTION APPARATUS**

(71) Applicant: Tohoku University, Sendai-shi, Miyagi 980-8577 (JP)
(72) Inventor: KOBAYASHI, Hiroaki, Sendai-shi, Miyagi 980-8577 (JP); FUKUSHIMA, Jun, Sendai-shi, Miyagi 980-8577 (JP); OKAWARA, Kazuki, Sendai-shi, Miyagi 980-8577 (JP); HOMMA, Itaru, Sendai-shi, Miyagi 980-8577 (JP); TAKIZAWA, Hirotsugu, Sendai-shi, Miyagi 980-8577 (JP)
(74) Representative: Plasseraud IP
(86) International application number: PCT/JP2021/037109
(87) International publication number: WO 2023/058182

(57) **Abstract**

The present invention provides a carbon dioxide reduction catalyst capable of reducing carbon dioxide under mild conditions, a carbon dioxide reduction method using the carbon dioxide reduction catalyst, and a carbon dioxide reduction apparatus. A metal oxide of the present invention has a spinel-type crystal structure including a metal element A, manganese, and oxygen. The A is at least one metal element selected from the group consisting of nickel and copper, a molar composition ratio of manganese to oxygen is from 1:1.8 to 1:2.2, and a molar composition ratio of the metal element A to manganese is from 1:1.7 to 1:2.3. In an X-ray diffraction pattern obtained by X-ray diffraction measurement using a Cu-Kα ray, the metal oxide has an intensity ratio (I_{18°}/I_{37°}) of 0.2 or more between a peak having a 2θ value in a range of from 16° to 20° (P_{18°}) and a peak having a 2θ value in a range of from 35° to 39° (P_{37°}).

## Description

### Technical Field

The present invention relates to a metal oxide having a spinel-type crystal structure, a method for producing the same, a carbon dioxide reduction method using the metal oxide, and a carbon dioxide reduction apparatus.

### Background Art

There is an issue of global warming caused by an increase in concentration of carbon dioxide (CO₂) in the atmospheric air because a large amount of carbon dioxide is discharged by burning fossil fuel in various plants or the like. Meanwhile, carbon monoxide is produced using fossil fuel as a raw material. When natural gas is used as a raw material for carbon monoxide, a mixed gas of carbon monoxide and hydrogen is obtained by steam-reforming the natural gas, and this mixed gas is further used as a raw material for various chemical products.

In order to solve the issue that a large amount of carbon dioxide is discharged, attention has been paid to a reaction for reducing carbon dioxide to carbon monoxide (CO). Research on a catalyst for reducing carbon dioxide has been actively conducted throughout the world. In particular, many metal oxides having excellent nature as a carbon dioxide reduction catalyst have been reported.

For example, Non-Patent Literature 1 discloses a carbon dioxide reduction catalyst using a spinel-type metal oxide such as Co₃O₄.

Patent Literature 1 discloses a carbon dioxide reduction catalyst using a spinel-type composite metal oxide such as CuCo₂O₄ or MnCo₂O₄.

Non-Patent Literature 2 discloses a carbon dioxide reduction catalyst using Ge-doped CeO₂.

### Citation List

### Patent Literature

Patent Literature 1: JP 2021-023840 A

### Non-Patent Literature

Non-Patent Literature 1: S. Gao, et al., "Ultrathin Co3O4 Layers Realizing Optimized CO2 Electroreduction to Formate", Angew. Chem. Int. Ed., 2016, 55, 698
Non-Patent Literature 2: J.M.Serra, et al., "Hydrogen Production via Microwave-Induced Water Splitting at Low Temperature", Nature Energy 5 pp.910-919 (2020)

### Summary of Invention

### Technical Problem

The carbon dioxide reduction method of Non-Patent Literature 1 utilizes electrochemical reduction. Therefore, electric energy is consumed. The carbon dioxide reduction method of Patent Literature 1 utilizes photoreduction. Therefore, it is necessary to use it together with a light absorber which absorbs light and converts it into electron energy. The carbon dioxide reduction method of Non-Patent Literature 2 utilizes reduction while heating with microwaves. Therefore, a microwave supply power source is required.

An object of the present invention is to provide a carbon dioxide reduction catalyst capable of reducing carbon dioxide under mild conditions, a carbon dioxide reduction method using the carbon dioxide reduction catalyst, and a carbon dioxide reduction apparatus.

Another object of the present invention is to provide a method for producing a catalyst at a lower temperature, focusing also on energy consumed in a method for producing a carbon dioxide reduction catalyst from a total viewpoint, in addition to reduction in energy required for the carbon dioxide reduction method.

### Solution to Problem

To solve the issues described above, the present invention is configured as follows.
[1] A metal oxide, containing a metal element A, manganese, and oxygen and having a spinel-type crystal structure,
   in which the A is at least one metal element selected from the group consisting of nickel, magnesium, zinc, copper, and iron;
   a molar composition ratio of manganese to oxygen is from 1:1.8 to 1:2.2;
   a molar composition ratio of the metal element A to manganese is from 1:1.7 to 1:2.3; and
   in an X-ray diffraction pattern obtained by X-ray diffraction measurement using a Cu-Kα ray, the metal oxide has an intensity ratio (I_{18°}/I_{37°}) of 0.2 or more between a peak having a 2θ value in a range of from 16° to 20° (P_{18°}) and a peak having a 2θ value in a range of from 35° to 39° (P_{37°}).
   The A is preferably at least one metal element selected from the group consisting of nickel and copper.
[2] The metal oxide according to [1], in which in the X-ray diffraction pattern obtained by X-ray diffraction measurement using a Cu-Kα ray, the metal oxide has a full width at half maximum (FWHM) of the peak (P_{18°}) having the 2θ value in the range of from 16 to 20 degrees of from 1.0° to 7.0°.
[3] The metal oxide according to [1] or [2], having an average particle size of from 1 to 10 nm.
[4] The metal oxide according to any one of [1] to [3], containing a compound represented by Formula (1):

   AMn₂O₄ (1)

   where in Formula (1), A is at least one selected from the group consisting of Ni and Cu, which is the same as the metal element A.
[5] A method for producing the metal oxide described in any one of [1] to [4], the method including:
   a first step of preparing a mixed solution containing a permanganate salt, a metal salt of the metal element A, and an alcohol; and
   a second step of stirring and reacting the mixed solution obtained in the first step at a temperature equal to or lower than a boiling point of the alcohol,
   in which the A is at least one metal element selected from the group consisting of nickel and copper; and
   a molar ratio in terms of a metal element between a charged amount of the metal salt of the metal element A and a charged amount of the permanganate salt (A:Mn) is from 1:1.7 to 1:2.3.
[6] A method for producing a metal oxide, the metal oxide containing a metal element A, manganese, and oxygen and having a spinel-type crystal structure, the method including:
   a first step of preparing a mixed solution containing a permanganate salt, a metal salt of the metal element A, and an alcohol; and
   a second step of stirring and reacting the mixed solution obtained in the first step at a temperature equal to or lower than a boiling point of the alcohol,
   in which the A is at least one metal element selected from the group consisting of nickel and copper;
   a molar composition ratio of manganese to oxygen is from 1:1.8 to 1:2.2; and
   a molar composition ratio of the metal element A to manganese is from 1:1.7 to 1:2.3.
[7] The method for producing a metal oxide according to [5] or [6],
   in which the permanganate salt is tetrabutylammonium permanganate; and
   the metal salt is at least one selected from the group consisting of nickel chloride and copper chloride.
[8] The method for producing a metal oxide according to any one of [5] to [7], further including:
   a third step of obtaining a precursor of the metal oxide by filtering a reaction solution obtained in the second step; and
   a fourth step of heat-treating the precursor obtained in the third step at a temperature of 20°C or higher and 300°C or lower.
[9] A metal oxide obtained by using the method for producing a metal oxide described in [6].
[10] A carbon dioxide reduction catalyst containing the metal oxide described in any one of [1] to [4] and [9].
[11] A carbon dioxide reduction method for reducing carbon dioxide using the metal oxide described in any one of [1] to [4] and [9],
   in which a reaction temperature in the carbon dioxide reduction reaction is 300°C or lower.
[12] A carbon dioxide reduction apparatus for reducing carbon dioxide, including:
   an introduction unit for carbon dioxide;
   a reaction unit including a carbon dioxide reduction catalyst; and
   a heating unit configured to heat the reaction unit;
   in which the carbon dioxide reduction catalyst contains the metal oxide described in any one of [1] to [4] and [9].
[13] A positive electrode material for a magnesium battery, containing the metal oxide described in any one of [1] to [4] and [9].
[14] An active material layer of a positive electrode material for a magnesium battery, including the positive electrode material described in [13].
[15] A positive electrode for a magnesium battery including: the active material layer of a positive electrode material described in [14]; and a current collector.
[16] A magnesium battery including: the positive electrode for a magnesium battery described in [15]; a negative electrode for a magnesium battery; and an electrolytic solution.

### Advantageous Effects of Invention

An object of the present invention is to provide a carbon dioxide reduction catalyst capable of reducing carbon dioxide under mild conditions, a carbon dioxide reduction method using the carbon dioxide reduction catalyst, and a carbon dioxide reduction apparatus.

Another object of the present invention is to provide a method for producing a catalyst at a low temperature. Carbon dioxide can be reduced with less energy from the viewpoint of overall energy consumption involving catalyst production and carbon dioxide reduction steps.

### Brief Description of Drawings

FIG. 1 is a transmission electron microscope (TEM) view of a metal oxide obtained in Example 1.
FIG. 2 illustrates X-ray diffraction (XRD) patterns of metal oxides obtained in Examples 1 to 7 and Comparative Examples 1 to 3. In FIG. 2, the X-ray diffraction (XRD) patterns of Examples 1 to 7 and Comparative Examples 1 to 3 are pattern a to pattern j, respectively.
FIG. 3 is a schematic diagram for explaining an example of a reaction for reducing carbon dioxide using a carbon dioxide reduction catalyst containing a metal oxide of the present embodiment.
FIG. 4 is a graph for evaluating charge/discharge characteristics of a magnesium secondary battery fabricated using the metal oxide of the present embodiment in Example 10.
FIG. 5 is an X-ray diffraction (XRD) pattern of a metal oxide obtained in Example 11.

### Description of Embodiments

Hereinafter, embodiments of a metal oxide, a method for producing the same, a carbon dioxide reduction method, and a carbon dioxide reduction apparatus according to the present invention will be described in detail. The present invention is not limited only to the following embodiments.

### [Metal oxide]

A metal oxide of the present embodiment includes a metal element A, manganese, and oxygen and has a spinel-type crystal structure. The A is at least one metal element selected from the group consisting of nickel, magnesium, zinc, copper, and iron, and is preferably at least one metal element selected from the group consisting of nickel and copper. In the metal oxide, a molar composition ratio of manganese to oxygen is from 1:1.8 to 1:2.2, and a molar composition ratio of the metal element A to manganese is from 1:1.7 to 1:2.3. In an X-ray diffraction pattern obtained by X-ray diffraction measurement using a Cu-Kα ray, the metal oxide has an intensity ratio (I_{18°}/I_{37°}) of 0.2 or more between a peak having a 2θ value in a range of from 16° to 20° (P_{18°}) and a peak having a 2θ value in a range of from 35° to 39° (P_{37°}).

### [Composition]

In the metal oxide of the present embodiment, the molar composition ratio of manganese to oxygen is preferably from 1:1.9 to 1:2.1, more preferably from 1:1.95 to 1:2.05, and still more preferably 1:2.

In the metal oxide of the present embodiment, the molar composition ratio of the metal element A to manganese is preferably from 1:1.8 to 1:2.2, more preferably from 1:1.9 to 1:2.1, and still more preferably 1:2.

In the metal oxide of the present embodiment, preferably the molar composition ratio of manganese to oxygen is 1:2 and the molar composition ratio of the metal element A to manganese is from 1:1.8 to 1:2.2; more preferably the molar composition ratio of manganese to oxygen is 1:2 and the molar composition ratio of the metal element A to manganese is from 1:1.9 to 1:2.1; and still more preferably the molar composition ratio of manganese to oxygen is 1:2 and the molar composition ratio of the metal element A to manganese is 1:2.

The metal oxide of the present embodiment preferably contains a compound represented by Formula (1). It is more preferably a compound represented by Formula (1).

AMn₂O₄ (1)

In the Formula (1), A is the same as the metal element A.

In the metal oxide of the present embodiment, the metal element A is preferably nickel.

The metal oxide of the present embodiment preferably contains a compound represented by Formula (2). It is more preferably a compound represented by Formula (2).

NiMn₂O₄ (2)

### [Crystal structure]

The metal oxide of the present embodiment is not particularly limited, but has an average particle size of preferably from 0.5 to 10 nm, and more preferably from 0.5 to 5 nm. The average particle size is still more preferably from 0.5 to 3 nm.

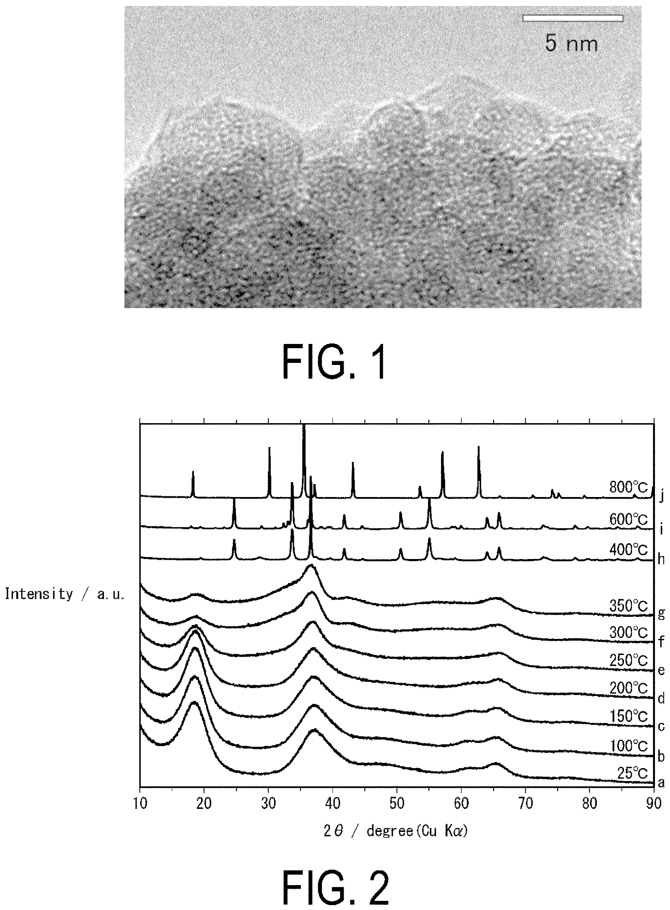

As a method for evaluating the average particle size, a known method can be used. For example, evaluation can be performed using a scanning electron microscope (SEM), a transmission electron microscope (TEM), or the like. For example, 2 to 5 nm nanoparticles were observed from the TEM view of a metal oxide of Example 1 which will be described below in FIG. 1.

Further, the average particle size here means a primary particle size of the metal oxide. When the metal oxide is in the form of a powder, a particle size of the powder is a secondary particle size, and primary particles are aggregated to form secondary particles.

An X-ray used for a powder X-ray diffraction pattern of the metal oxide of the present embodiment is preferably a characteristic X-ray of Cu-kα. When the metal element A of the metal oxide of the present embodiment is, for example, nickel, a peak (P_{18°}) is observed near 18° where the 2θ value is in the range of from 16° to 20° in an X-ray diffraction pattern line, as in pattern a in FIG. 2. A peak (P_{37°}) is observed near 37° where the 2θ value is in the range of from 35° to 39°. Peak shapes of the peak near 18° (P_{18°}) and the peak near 37° (P_{37°}) are broad. In the powder X-ray diffraction pattern of the metal oxide of the present embodiment, when the metal element A is nickel, an intensity ratio (I_{18°}/I_{37°}) between the peak near 18°(P_{18°}) and the peak near 37° (P_{37°}) is 0.2 or more. It is preferably 0.3 or more, more preferably 0.5 or more, and still more preferably 0.8 or more. It is preferably 3.0 or less, more preferably 2.5 or less, and still more preferably 2.0 or less.

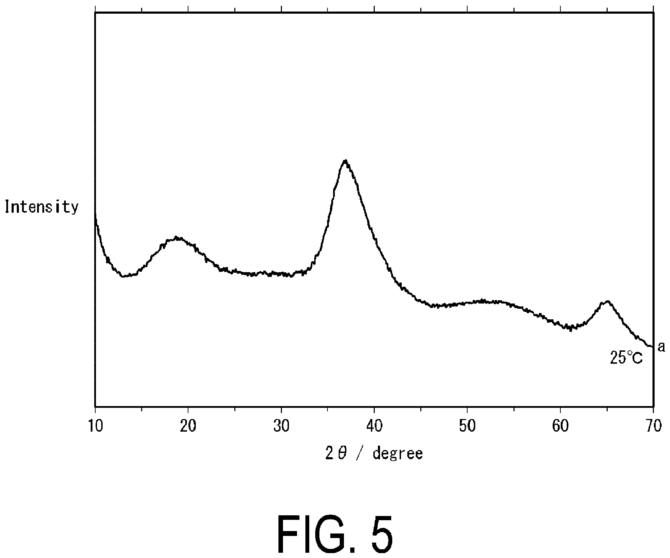

When the metal element A of the metal oxide of the present embodiment is, for example, copper, a peak (P_{18°}) is observed near 18° where the 2θ value is in the range of from 16° to 20° in an X-ray diffraction pattern line, as in a pattern in FIG. 5. A peak (P_{37°}) is observed near 37° where the 2θ value is in the range of from 35° to 39°. Peak shapes of the peak near 18° (P_{18°}) and the peak near 37° (P_{37°}) are broad. In the powder X-ray diffraction pattern of the metal oxide of the present embodiment, when the metal element A is copper, the intensity ratio (I_{18°}/I_{37°}) between the peak near 18° (P_{18°}) and the peak near 37° (P_{37°}) is 0.2 or more. It is preferably 0.25 or more, and more preferably 0.3 or more. It is preferably 2.0 or less, and more preferably 1.5 or less.

In the present invention, as the peak intensity ratio (I_{18°}/I_{37°}), for example, a peak height ratio can be used. Alternatively, as the peak intensity ratio (I_{18°}/I_{37°}), for example, a peak integrated area ratio can be used. From the viewpoint of difficulty of evaluation, the peak height ratio is preferably used. Namely, when the metal element A is nickel, a height ratio (I_{18°}/I_{37°}) between the peak near 18°(P_{18°}) and the peak near 37° (P_{37°}) is 0.2 or more. It is preferably 0.3 or more, more preferably 0.5 or more, and still more preferably 0.8 or more. It is preferably 3.0 or less, more preferably 2.5 or less, and still more preferably 2.0 or less. When the metal element A is copper, the height ratio (I_{18°}/I_{37°}) between the peak near 18° (P_{18°}) and the peak near 37° (P_{37°}) is 0.2 or more. It is preferably 0.25 or more, and more preferably 0.3 or more. It is preferably 2.0 or less, and more preferably 1.5 or less.

A method for determining the peak height from the X-ray diffraction pattern is, for example, a known method. For example, a predetermined peak height may be measured using processing software or the like attached to an X-ray diffraction pattern measuring apparatus. For example, in Example 1 which will be described below, the peak heights of the X-ray diffraction pattern a in FIG. 2 could be measured using commercially available graph analysis software, and the intensity ratio (I_{18°}/I_{37°}) between the peak near 18° (P_{18°}) to the peak near 37° (P_{37°}) was 1.2 using the ratio of the peak heights.

In the X-ray diffraction pattern obtained by X-ray diffraction measurement using a Cu-Kα ray, the metal oxide of the present embodiment has a full width at half maximum (FWHM) of the peak (P_{18°}) having the 2θ value in the range of from 16 to 20 degrees of preferably from 1.0° to 7.0°, and more preferably from 3.0° to 7.0°. The reason why the X-ray diffraction pattern of the metal oxide of the present embodiment indicates a broad peak is unknown at the time of filing the application. It is presumed that this is derived from the fact that extremely small crystals of several nanometers are obtained by a low-temperature producing process. Further, it is presumed that the metal oxide is not a metal oxide of a high-temperature stable phase but a metal oxide of a low-temperature metastable phase because of the low-temperature producing process.

### [Method for producing metal oxide]

Next, a method for producing a metal oxide of the present embodiment will be described.

The method for producing a metal oxide according to the present embodiment includes the following first and second steps, preferably includes first to third steps, and more preferably includes first to fourth steps.

### [First step]

In this step, a mixed solution containing a permanganate salt, a metal salt of the metal element A, and an alcohol is prepared. A molar ratio in terms of a metal element between a charged amount of the metal salt of the metal element A and a charged amount of the permanganate salt (A:Mn) is from 1:1.7 to 1:2.3. It is more preferably from 1:1.9 to 1:2.1, and still more preferably 1:2.

The permanganate salt according to the present embodiment is not particularly limited as long as it has certain solubility in the alcohol used. For example, a dissolution rate is preferably 10 mmol/L or more. Examples of the permanganate salt according to the present embodiment include organic salts of permanganic acid such as tetrabutylammonium permanganate. A method for producing an organic salt of permanganic acid is not particularly limited, and can be a known method. For example, an aqueous solution of an alkali metal salt of permanganic acid such as potassium permanganate is mixed with an aqueous solution of an organic halide salt such as tetrabutylammonium bromide to obtain an organic salt of permanganic acid.

The metal salt of the metal element A according to the present embodiment is not particularly limited as long as it has certain solubility in the alcohol used. For example, a dissolution rate is preferably 10 mmol/L or more. Examples of the metal salt of the metal element A according to the present embodiment include halides of the metal element A such as nickel chloride and copper chloride. These salts may also be hydrates.

The alcohol according to the present embodiment is not particularly limited as long as it can dissolve at least a part of the permanganate salt according to the present embodiment and the metal salt of the metal element A according to the present embodiment as a reaction solvent. Examples of the alcohol according to the present embodiment include monohydric alcohols having a hydroxy group, such as methanol and ethanol. The alcohol according to the present embodiment may contain other components if necessary. For example, an ether-based organic solvent such as 2-dimethoxyethane may be used. A proportion of the alcohol to the other components is not particularly limited, and may be from 1:10 to 10:1 or from 1:2 to 2:1 in a volume ratio (v/v).

An amount of the alcohol used is preferably from 10 to 1000 mL.

In this step, a method for preparing the mixed solution containing a permanganate salt, a metal salt, and an alcohol is not particularly limited.

Examples of an order of mixing the reactants include an order of preparing a first mixed solution of a metal salt and an alcohol and then adding a permanganate salt or a solution of a permanganate salt to the first mixed solution, and an order of preparing a first mixed solution of a permanganate salt and an alcohol and then adding a metal salt or a solution of a permanganate salt to the first mixed solution.

A temperature of the mixed solutions is not particularly limited, and the mixed solution may be heated to enhance solubility, and is usually preferably prepared at room temperature.

A method for stirring the mixed solutions and a stirring time are not particularly limited as long as the mixed solution composed of the permanganate salt, the metal salt, and the alcohol can be sufficiently mixed.

### [Second step]

In this step, the mixed solution obtained in the first step is stirred and reacted at a temperature equal to or lower than a boiling point of the alcohol.

A reaction temperature and a reaction time are not specifically limited, and can be appropriately selected depending on the progress of the reaction, for example, in a range of from 10°C to a boiling point of the solvent used, for a reaction time of from 1 minute to 24 hours. The reaction temperature is preferably in a range of from 20°C to the boiling point of the solvent used, more preferably from 20°C to 50°C, still more preferably from 20°C to 30°C, and particularly preferably room temperature (for example, 25°C).

A reaction atmosphere is not particularly limited and may be, for example, the atmospheric air (atmospheric pressure).

### [Third step]

In this step, the reaction solution obtained in the previous second step is filtered to obtain a precursor of the metal oxide.

A filtration method is not particularly limited, and a known method can be used. For example, suction filtration may be used. A step of washing and drying a precipitate may be included. A washing method is not particularly limited, and pure water, ethanol, or a mixed solution thereof can be used.

### [Fourth step]

In this step, the precursor obtained in the third step is heat-treated at a temperature of 20°C or higher and 300°C or lower.

A heat treatment method is not particularly limited, and examples thereof include a method of heating in the atmospheric air at from 25 to 300°C for from 0.3 to 5 hours.

### [Carbon dioxide reduction catalyst]

A carbon dioxide reduction catalyst of the present embodiment contains the metal oxide of the present embodiment described above. The metal oxide of the present embodiment can be used, as it is, as a catalyst. Each aspect of the metal oxide of the present embodiment described above can be used.

The carbon dioxide reduction catalyst of the present embodiment may contain the metal oxide of the present embodiment and a catalyst carrier. Examples of the catalyst carrier include materials used in ordinary metal-based catalysts.

The carbon dioxide reduction catalyst of the present embodiment may be supported on a carrier. The carrier is preferably a material which is inert to the reaction with the catalyst and excellent in chemical stability, and is preferably quartz, glass, alumina, silica, titanium, copper or the like. The shape of the carrier may be any shape as long as the carbon dioxide reduction reaction of the present invention proceeds, and can be any shape such as a plate shape, a fiber shape, a spherical shape, a rectangular shape, or a mesh shape.

### [Carbon dioxide reduction method]

The carbon dioxide reduction method of the present embodiment is a carbon dioxide reduction method by using the metal oxide of the present embodiment as a catalyst. That is, it is a method of reducing carbon dioxide by using the carbon dioxide reduction catalyst of the present embodiment described above to bring carbon dioxide into contact with the catalyst. In the carbon dioxide reduction method of the present embodiment, preferably, carbon dioxide is reduced to produce carbon monoxide.

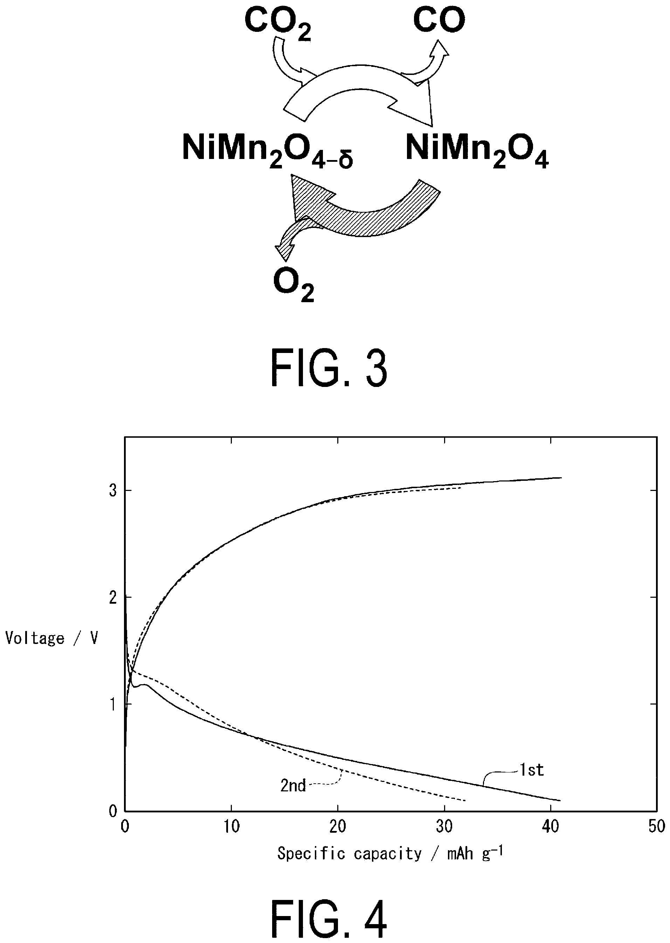

FIG. 3 is a schematic diagram for explaining an example of a reaction for reducing carbon dioxide using a carbon dioxide reduction catalyst containing a metal oxide of the present embodiment. With reference to FIG. 3, an example of a possible mechanism of the reduction reaction is inferred and explained. However, the present invention is not limited to this mechanism.

FIG. 3 illustrates an example in which NiMn₂O₄ obtained in an example of the present invention is used as the metal oxide of the present embodiment. The NiMn₂O₄ described above can function as the carbon dioxide reduction catalyst. In the example of the mechanism, oxygen ions are removed from the NiMn₂O₄ by heating or the like as presented in the following Formula (3) to produce oxygen gas. Thereafter, it is considered that it acts on CO₂ on the NiMn₂O₄, that a carbon dioxide reduction reaction represented by the following Formula (4) proceeds, and that CO is produced from CO₂.

NiMn₂O₄ → NiMn₂O_{4-σ} + δ/2O₂ (3)

δCO₂ + NiMn₂O_{4-σ} → δCO + NiMn₂O₄ (4)

For the metal oxide of the present embodiment, an example in which carbon dioxide is reduced to produce carbon monoxide has been presented, but the catalytic reaction by the metal oxide of the present embodiment is not limited thereto. The metal oxide of the present embodiment may be used as catalyst materials for other reactions such as a carbon dioxide reduction reaction other than the production of carbon monoxide, other reduction reactions, and further oxidation reactions.

A reaction temperature of the carbon dioxide reduction is preferably from 50 to 300°C, more preferably from 100 to 250°C, and still more preferably from 100 to 200°C. As a reaction apparatus, for example, a reaction apparatus using a gas and a solid catalyst can be usually used. Carbon dioxide introduction method and introduction rate are not particularly limited and can be appropriately selected depending on a reaction scale or the like.

A reaction pressure of the carbon dioxide reduction is not particularly limited and is preferably from 0.1 to 10⁵ Pa and more preferably the atmospheric pressure.

Carbon monoxide produced by the carbon dioxide reduction method of the present embodiment can be discharged to the outside of the reaction system and used as an industrial raw material.

### [Carbon dioxide reduction apparatus]

The carbon dioxide reduction apparatus of the present embodiment is an apparatus for reducing carbon dioxide, and includes an introduction unit for carbon dioxide; a reaction unit including a carbon dioxide reduction catalyst; and a heating unit configured to heat the reaction unit. The carbon dioxide reduction catalyst includes various aspects of the metal oxide of the present embodiment described above.

The introduction unit for carbon dioxide described above is not particularly limited, and, for example, a gas introduction unit used in a known gas reactor can be used. The reaction unit including the carbon dioxide reduction catalyst is not particularly limited, and, for example, a gas phase reaction apparatus using a solid catalyst can be used. The heating unit is not particularly limited, and various known heating means can be used.

### [Electrode material]

An electrode material of the present embodiment contains the metal oxide according to the present embodiment. For example, a positive electrode material for a magnesium battery contains the metal oxide of the present embodiment. A positive electrode active material of the positive electrode material for a magnesium battery is preferably the metal oxide of the present embodiment. An example of the positive electrode material for a magnesium battery will be described below, but the electrode material of the present embodiment is not particularly limited to the positive electrode material for a magnesium battery.

### [Magnesium battery]

Magnesium has a large electric capacity per unit volume because its ion is a multivalent ion. In addition, as compared with lithium, magnesium has a high melting point and is safe, and, advantageously, has a small bias in resource distribution on the earth, is abundant in resource amount, and is inexpensive. Therefore, a magnesium battery using metal magnesium as a negative electrode has attracted attention as a next-generation battery replacing a lithium battery.

The magnesium battery of the present embodiment includes a positive electrode, a negative electrode, and an electrolytic solution. Usually, a separator is provided between the positive electrode and the negative electrode.

In the present embodiment, all batteries involving a reaction of magnesium in the negative electrode are included in the "magnesium battery". Specifically, the reaction of magnesium means, for example, dissolution and precipitation of magnesium at an interface between metallic magnesium and the electrolytic solution, an intercalation reaction of magnesium ions in a carbon-based material, alloying reaction of magnesium with an element such as bismuth, and absorption and desorption of magnesium ions onto and from a battery material such as titanium dioxide at a low potential such as 1 V or lower. Specific examples of the type of the magnesium battery include a primary battery, a secondary battery, an air battery, and an electric double layer capacitor, and a secondary battery is preferable.

Hereinafter, the magnesium battery using the positive electrode material composed of the metal oxide of the present embodiment will be described using an example of a magnesium secondary battery. The magnesium battery of the present embodiment is not particularly limited to the secondary battery.

A shape of the magnesium secondary battery according to the present embodiment is not limited. Examples of the shape include a coin shape, a button shape, a sheet shape, a laminate shape, a cylindrical shape, a flat shape, and a square shape.

### <Positive electrode>

The positive electrode according to the present embodiment includes a current collector and a positive electrode active material layer formed on a surface of the current collector. The positive electrode active material layer contains the positive electrode material of the present embodiment as a positive electrode active material. In addition, it may further contain a conductive aid and a binder.

### "Current collector"

The current collector in the positive electrode of the present invention is composed of a conductive material such as platinum, copper, stainless steel (SUS), aluminum, iron, chromium, nickel, titanium, or carbon. The current collector may be in the form of a net (mesh), a sheet, or the like. Specific examples of a positive electrode current collector include an aluminum mesh.

### "Positive electrode active material layer"

The positive electrode active material layer according to the present embodiment contains the positive electrode material of the present embodiment as the positive electrode active material. Namely, the positive electrode active material layer according to the present embodiment contains a metal material of the present embodiment as the positive electrode active material. The metal material of the present embodiment includes various preferred embodiments and specific examples as described above. In addition, materials which will be described in Examples below are also included.

The positive electrode active material layer according to the present embodiment may also contain another positive electrode active material as the positive electrode active material. The other positive electrode active material is not particularly limited, and a known active material usually used as an active material in a magnesium battery other than the metal material of the present embodiment can be used. Examples of the other positive electrode active material include transition metal oxides; transition metal elements; conductive polymers such as polyacetylene, polyaniline, polypyrrole, polythiophene, and polyparaphenylene and derivatives thereof; and disulfide compounds.

A thickness of the active material layer in the positive electrode of the present invention is not particularly limited, but is usually 1 µm or more and 1000 µm or less, preferably 1 µm or more and 500 µm or less, and more preferably 1 µm or more and 300 µm or less.

A content of the electrode material of the present embodiment in 100 mass% of a total positive electrode active material in the positive electrode active material layer of the present embodiment is 50 mass% or more, preferably 80 mass% or more, and more preferably 90 mass% or more. The content of the metal material of the present embodiment in 100 mass% of the electrode material of the present embodiment is 80 mass% or more, preferably 90 mass% or more, more preferably 95 mass% or more, and particularly preferably 100%.

Examples of the conductive aid of the present embodiment include carbon black such as acetylene black, ketjen black, furnace black, and thermal black. Among them, acetylene black is preferable. A content of the conductive aid is not particularly limited, but is, for example, usually 1 mass% or more and 50 mass% or less, preferably 5 mass% or more and 30 mass% or less, and more preferably 10 mass% or more and 20 mass% or less with respect to a total mass of the positive electrode active material layer.

Examples of the binder of the present embodiment include polyvinylidene fluoride (PVDF), polytetrafluoroethylene (PTFE), carboxymethyl cellulose (CMC), styrene-butadiene copolymer (SBR), acrylonitrile-butadiene copolymer (NBR), polyacrylonitrile (PAN), ethylenevinyl alcohol copolymer (EVOH), polyurethane, polyacrylate, polyvinyl ether, polyamide, and polyimide. A content of the binder is not particularly limited, but is, for example, usually 1 mass% or more and 50 mass% or less, preferably 5 mass% or more and 30 mass% or less, and more preferably 10 mass% or more and 20 mass% or less with respect to the total mass of the positive electrode active material layer. When two or more binders are used in combination, a total mass of the binders may be the above-described content.

### "Method for producing positive electrode"

The positive electrode of the present invention can be produced by applying or pressurebonding the positive electrode material composition of the present embodiment onto the current collector, and drying the composition. The positive electrode material composition of the present embodiment contains the positive electrode material of the present embodiment as the positive electrode active material. In addition, it may further contain a conductive aid and a binder.

In the above production method, an amount of the positive electrode material composition of the present embodiment to be used may be appropriately set so that the dried active material layer has a desired thickness.

In a method for producing the positive electrode of the present embodiment, the positive electrode material composition of the present embodiment may be applied onto the current collector according to a method known per se, and application may be performed using, for example, a self-propelled coater, an inkjet method, a doctor blade method, a spray method, or a combination thereof as a specific application method.

In the method for producing the positive electrode of the present embodiment, drying of the positive electrode material composition of the present invention on the current collector may be performed according to a known method, and is usually performed by a heat treatment. Drying conditions during heating, such as necessity of vacuum, a drying time, and a drying temperature, may be appropriately set according to an amount of the positive electrode material composition of the present invention to be applied and a volatilization rate thereof. A specific drying method may be, for example, drying in vacuum at usually 50°C or higher and 150°C or lower, preferably 70°C or higher and 130°C or lower for usually 1 hour or more and 20 hours or less, preferably 3 hours or more and 12 hours or less.

In the method for producing the positive electrode according to the present embodiment, a press treatment may be performed after drying. Examples of the press treatment according to the present embodiment include a calender roll method and a flat plate press method, and the calender roll method is preferable.

### <Negative electrode>

A negative electrode active material constituting the negative electrode of the present embodiment is not particularly limited, and examples thereof include metal magnesium, a magnesium-containing alloy, a metal or an alloy capable of being alloyed with magnesium, an oxide capable of doping and dedoping magnesium ions, a transition metal nitride capable of doping and dedoping magnesium ions, and a carbon material capable of doping and dedoping magnesium ions.

The negative electrode is any appropriate electrode configured to adsorb magnesium and desorb magnesium ions. The negative electrode may include any appropriate active material layer configured to adsorb and desorb magnesium ions. The active material of the negative electrode is not limited to a specific material.

### <Separator>

The separator of the present embodiment is not particularly limited as long as the negative electrode and the positive electrode can be electrically insulated from each other so that a nonaqueous electrolyte solution which will be described below permeates the separator. Examples of the separator of the present embodiment include a porous synthetic resin film such as a porous film made of a polyolefin polymer. Specific examples of the porous film include porous films made of polyethylene polymer and porous films made of polypropylene.

### <Electrolytic solution>

The electrolytic solution of the present embodiment is not particularly limited as long as magnesium ions can be guided between the negative electrode and the positive electrode, and may be any appropriate electrolytic solution such as a nonaqueous magnesium ion conductor. Examples of the nonaqueous electrolytic solution of the present embodiment include an electrolytic solution containing an electrolyte and an organic solvent.

Examples of the solvent in the electrolytic solution according to the present invention include ether-based solvents such as diethyl ether, tetrahydrofuran, 2-methyltetrahydrofuran, diisopropyl ether, 1,2-dimethoxyethane, diethylene glycol dimethyl ether (diglyme), triethylene glycol dimethyl ether (triglyme) and tetraethylene glycol dimethyl ether (tetraglyme); halogenated hydrocarbon-based solvents such as dichloromethane and chloroform; carbonatebased solvents such as dimethyl carbonate and diethyl carbonate; nitrile-based solvents such as acetonitrile; and sulfone-based solvents such as sulfolane, dimethyl sulfone and ethyl methyl sulfone.

Among them, ether-based solvents and sulfone-based solvents are preferable, and ether-based solvents are preferable.

Among these solvents, tetrahydrofuran, 1,2-dimethoxyethane, diglyme, triglyme, tetraglyme, and sulfolane are preferable; tetrahydrofuran, diglyme, triglyme, and tetraglyme are more preferable; and tetrahydrofuran and triglyme are still more preferable.

A mixture of two or more of these solvents may be used.

Examples of the electrolyte contained in the electrolytic solution of the present embodiment include a Lewis basic organomagnesium compound RMgX. Here, R is selected from the group consisting of alkyl ligands such as methyl, ethyl, and butyl, aryl, benzyl, amide, naphthal, phenyl, alkenyl, alkynyl or derivatives thereof. X is a halide such as F, Cl, Br, or I. In some embodiments, the electrolyte further contains a Lewis acid compound that causes a metal exchange reaction. Examples of the Lewis acid compound include, but are not limited to, AlCl₃, BCl₃, AlCl₂Et, FeCl₂, FeCl₃, and TiCl₄. In some embodiments, the electrolyte further contains a salt. Examples of the salt include, but are not limited to, MgCl₂, Mg(ClO₄)₂, Mg(BF₄)₂, Mg(AsF₆)₂, Mg(PF₆)₂, Mg(CF₃SO₃)₂, Mg[N(CF₃SO₂)₂]₂, Mg[C(SO₂CF₃)₃]₂, LiCl, LiClO₄, LiBF₄, LiAsF₆, LiPF₆, Li(CF₃SO₃), LiN(CF₃SO₂)₂, LiC(SO₂CF₃)₃, NaCl, NaClO₄, NaBF₄, NaAsF₆, NaPF₆, Na(CF₃SO₃), NaN(CF₃SO₂)₂, and NaC(SO₂CF₃)₃.

An example of the electrolytic solution of the present embodiment is a mixture of compound A, aluminum compound B, and ether-based solvent C which will be described below.

### Compound A:

B(OMgCl)₃, CH₃B(OMgCl)₂, C₂H₅B(OMgCl)₂, CH₃OB(OMgCl)₂, C₂H₅OB(OMgCl)₂, C₆H₅OB(OMgCl)₂, C₆H₅B(OMgCl)₂, C₆H₄[B(OMgCl)₂]₂, (C₆H₄F)B(OMgCl)₂, (C₆H₃F₂)B(OMgCl)₂, [C₆H₄(CH₃)]B(OMgCl)₂, [C₆H₃(CH₃)₂]B(OMgCl)₂, [C₆H₄(OCH₃)]B(OMgCl)₂, [C₆H₃(OCH₃)₂]B(OMgCl)₂, [C₆H₄(C₆H₅)]B(OMgCl)₂, [C₆H₄(OC₆H₅)]B(OMgCl)₂, C₁₀H₇B(OMgCl)₂, C₁₄H₉B(OMgCl)₂, (C₄H₃O)B(OMgCl)₂, (C₄H₃S)B(OMgCl)₂, (C₄H₃NH)B(OMgCl)₂, (C₅H₄N)B(OMgCl)₂, or (C₈H₅O)B(OMgCl)₂

### Aluminum compound B:

Boron (III) chloride, aluminum (III) chloride, methylaluminum dichloride, dimethylaluminum chloride, or triphenylaluminum

### Ether-based solvent C:

Tetrahydrofuran, diglyme, triglyme, or tetraglyme.

A mixture of B(OMgCl)₃ or C₆H₅B(OMgCl)₂, aluminum (III) chloride, and tetrahydrofuran, triglyme or a mixed solvent of these two species is preferable. A mixture of B(OMgCl)₃, aluminum (III) chloride, and tetrahydrofuran, triglyme, or a mixed solvent of two species thereof is particularly preferable.

Specific examples of the electrolyte contained in the electrolytic solution of the present embodiment include "MaglutionTMB01" (B(OMgCl)₃-AlCl₃ complex (1:6)/triglyme solution), "MaglutionTMB0₂" (B(OMgCl)₃-AlCl₃ complex (1:6)/triglyme-tetrahydrofuran (50:50 vol%) solution), and MgTFSA₂ available from Kishida Chemical Co., Ltd.
(Mg[N(CF₃SO₂)₂]₂)/triglyme solution.

### Examples

Next, the present invention will be described in detail by way of examples, but is not limited by these examples.

### (Raw materials)

Nickel chloride hexahydrate: FUJIFILM Wako Pure Chemical Corporation, 98.0+%
Copper acetate hydrate: FUJIFILM Wako Pure Chemical Corporation, 98.0+%
Potassium permanganate: FUJIFILM Wako Pure Chemical Corporation, 99.3+%
Tetrabutylammonium bromide: TCI, > 98.0%
Methanol: FUJIFILM Wako Pure Chemical Corporation
Ethanol: FUJIFILM Wako Pure Chemical Corporation
1,2-Dimethoxyethane: Kanto Chemical Co., Inc.

### (Evaluation method)

### <Transmission electron microscope (TEM)>

Apparatus: EM-002B (Topcon)

### <X-ray diffraction method>

Apparatus: D2 PHASER XE-T EDITION (Bruker)
Light source: Cu-Kα
Holder: Silicon non-reflective sample holder
Divergence slit: 1 mm
Solar slit: 2.5°
Air scatter screen: 3 mm

### <Method for measuring specific surface area>

BET specific surface area: BET method by low-temperature low-humidity physical adsorption of inert gas
Measuring apparatus: BELSORP-mini II
Measurement condition: N₂

### <Method for measuring CO concentration: Gas chromatography>

Apparatus: Sensor gas chromatograph
Detector: Semiconductor

### (Synthesis Example 1)

### "Synthesis of tetrabutylammonium permanganate"

Potassium permanganate (3.16 g) was dissolved in pure water (100 mL) to prepare an aqueous potassium permanganate solution. Tetrabutylammonium bromide (6.45 g) was dissolved in pure water (50 mL) to prepare an aqueous tetrabutylammonium bromide solution. The aqueous tetrabutylammonium bromide solution was added dropwise while the aqueous potassium permanganate solution was stirred, and the mixture was stirred for 1 hour, and then the produced precipitate was sucked and filtered. The obtained precipitate was washed with 200 mL of pure water and dried under reduced pressure at 25°C to obtain 6 g of tetrabutylammonium permanganate.

### "Fabrication of metal oxide and XRD evaluation"

### (Example 1)

A nickel chloride hexahydrate (475 mg) was dissolved in a mixed solvent of methanol (25 mL) and 1,2-dimethoxyethane (25 mL) to prepare a first mixed solution. The tetrabutylammonium permanganate obtained in Synthesis Example 1 was added in an amount of 723 mg to the first solution in one time to obtain a second mixed solution. The second mixed solution was stirred at 25°C for 1 hour to generate a precipitate, thereby obtaining a third mixed solution. The precipitate obtained by suction filtration of the third mixed solution was washed with 300 mL of pure water and 300 mL of ethanol in this order, and dried at 100°C for 12 hours. Thereafter, it was held at 25°C for 2 hours. 200 mg of NiMn₂O₄ powder (NMO-1) of the present example was obtained.

TEM and XRD measurements were performed on the NiMn₂O₄ powder (NMO-1) of the present example. The results are illustrated in FIG. 1 and FIG. 2 (pattern a).

### (Examples 2 to 7)

200 mg each of NiMn₂O₄ powder (NMO-2) to powder (NMO-7) of Examples 2 to 7 were obtained in the same manner as in Example 1, except that they were held at 100°C, 150°C, 200°C, 250°C, 300°C, and 350°C, respectively, for 2 hours, instead of being held at 25°C for 2 hours, in the atmospheric air in Examples 2 to 7.

XRD measurement was performed on the NiMn₂O₄ powder (NMO-2) to powder (NMO-7) of Examples 2 to 7. The results are illustrated in FIG. 2 (patterns b to g for NMO-2 to NMO-7, respectively, in FIG. 2).

### (Comparative Examples 1 to 3)

In Comparative Examples 1 to 3, 200 mg each of metal oxide powder (cNMO-1) to powder (cNMO-3) of Comparative Examples 1 to 3 were obtained in the same manner as in Example 1, except that they were held at 400°C, 600°C, and 800°C, respectively, for 2 hours, instead of being held at 25°C for 2 hours in Example 1.

XRD measurement was performed on the metal oxide powder (cNMO-1) to powder (cNMO-3) of Comparative Examples 1 to 3. The results are illustrated in FIG. 2 (patterns h to j for cNMO-1 to cNMO-3, respectively, in FIG. 2).

### "Carbon dioxide reduction reaction"

### (Example 8)

After 100 mg of the NiMn₂O₄ powder sample (NMO-2) obtained in Example 2 was weighed, it was placed in a thermogravimeter and held at 100°C in a built-in electric oven while flowing carbon dioxide (flow rate: 100 ml/min or less, CO₂ concentration (99.9%)). After holding the sample for 150 minutes, the CO concentration (unit: volume ppmor or mass ppm) in the gas after flowing was measured by gas chromatography. The results are indicated in Table 1.

In addition, the powder sample (NMO-2) was held at 100°C in the electric furnace for 1000 minutes while flowing carbon dioxide, and then cooled to room temperature. A powder sample (NMO-2') after the reaction was taken out.

The specific surface areas of the powder sample (NMO-2) before the reaction and the powder sample (NMO-2') after the reaction were measured. The results are indicated in Table 2.

XRD measurement was performed on the powder sample (NMO-2') after the reaction. The results were the same as those of the powder sample (NMO-2) before the reaction.

### (Examples 9 and 10)

The CO concentration in the gas after flowing was measured in the same manner as in Example 8, except that the gas was held at 250°C and 350°C in the electric furnace instead of being held at 100°C in the electric furnace. The results are indicated in Table 1.

### (Comparative Example 4)

After 100 mg of the NiMn₂O₄ powder sample (NMO-1) produced at 25°C was weighed, the CO concentration in the gas after flowing was measured in the same manner as in Example 8, except that the sample was not installed (Blank: state without any sample), instead of being installed in the thermogravimeter. The results are indicated in Table 1.

### (Considerations)

As a result of comparison in CO concentration between Comparative Example 4 (Blank) and Example 8 (100°C), the CO concentration was clearly increased in Examples 6 and 7 in which the metal oxide of the present embodiment was installed. This indicates that carbon dioxide could be converted into carbon monoxide by the NiMn₂O₄ powder sample (NMO-1) produced at 25°C.

Further, the CO concentration was increased in Example 9 (250°C) and Example 10 (350°C) as compared with that in Example 8 (100°C). It is believed that the high temperature process increased the rate of reaction from carbon dioxide to CO. Meanwhile, the CO concentration was decreased in Example 10 (350°C) as compared with that in Example 9 (250°C). Although the reaction rate was increased due to the higher reaction temperature, the carbon dioxide conversion amount was decreased. The main cause is believed to be that the NiMn₂O₄ powder (NMO-1) obtained in Example 1 was changed to the metal oxide (NMO-7) obtained in Example 7 at 350°C, as illustrated in FIG. 2 (pattern g) of Example 7. Therefore, it is presumed that the catalytic effect on the reaction of reducing carbon dioxide would be weakened.

From the experimental results at the time of filing the application, the NiMn₂O₄ powder sample (NMO-1) to NiMn₂O₄ powder sample (NMO-7) of Examples 1 to 7, which are the metal oxides of the present embodiment, indicated broad peaks as presented in the XRD patterns a to g of FIG. 2. The XRD patterns h and i of Comparative Examples 1 and 2 in FIG. 2 coincide with the XRD pattern of NiMnOs crystals, and the XRD pattern j of Comparative Example 3 in FIG. 2 coincides with the XRD pattern of NiMn₂O₄ crystals which are spinel crystals. The NiMn₂O₄ powder samples of Examples 1 to 7 are presumed to be spinel crystals of a low-temperature metastable phase in contrast to the high-temperature stable phase of Comparative Example 3. That is, it is believed that, in Example 7 (350°C), the phase starts to change until it does not correspond to a low-temperature metastable phase like the metal oxide of the present embodiment, and the performance itself of the catalyst decreases.

**[Table 1]**

| | Metal oxide | Treatment temperature (°C) | CO concentration (ppm) |
|---|---|---|---|
| Example 8 | NMO-2 | 100 | 0.1 |
| Example 9 | NMO-5 | 250 | 1.7 |
| Example 10 | NMO-7 | 350 | 1.5 |
| Comparative Example 4 | - | 100 | 0 |

**[Table 2]**

| | Specific surface area (m²/g) |
|---|---|
| NiMn₂O₄ powder before reaction | 283.2 |
| NiMn₂O₄ powder after reaction at 1000 min | 267.2 |

### [Production of magnesium battery using positive electrode active material of present embodiment]

### (Example 10)

A positive electrode material composition was prepared by mixing 60 parts by mass of the NiMn₂O₄ powder (NMO-1) obtained in Example 1, 30 parts by mass of acetylene black (conductive aid: FX-35, available from Denka Company Limited), and 10 parts by mass of polytetrafluoroethylene (binder: 6-J, Mitsui Chemicals, Inc.). The positive electrode material composition was used to pressure-bond a positive electrode active material layer (thickness: about 30 µm) onto a current collector made of an aluminum mesh (The Nilaco Corporation, 100 mesh), and a vacuum heat treatment was performed at 100°C for 12 hours to produce a positive electrode. The positive electrode, a negative electrode, a reference electrode, and an electrolytic solution were set in a 2032 type coin cell in a glove box filled with argon gas to produce a magnesium battery. Metal magnesium foil was used as the negative electrode, and a Mg[N(CF₃SO₂)₂]₂/triglyme solution was used as the electrolytic solution. The Mg[N(CF₃SO₂)₂]₂/triglyme solution was prepared in advance by dissolving 0.3 M of MgTFSA₂ (magnesium bis(trifluoromethanesulfonyl)amide, Kishida Chemical Co., Ltd.) in triglyme (Kanto Chemical Co., Inc.). The fabricated battery was subjected to a charge-discharge test at a current density of 10 mAg⁻¹ and an operating temperature of 50°C. The results are illustrated in FIG. 4.

### (Example 11)

CuMn₂O₄ powder (CMO-1) powder (200 mg) of the present example was obtained in the same manner as in Example 1, except that 199 mg of a copper acetate hydrate was used instead of 475 mg of the nickel chloride hexahydrate.

XRD measurement was performed on the CuMn₂O₄ powder (CMO-1) of the present example. The results are illustrated in FIG. 5.

## Claims

1. A metal oxide, comprising a metal element A, manganese, and oxygen and having a spinel-type crystal structure,
wherein the A is at least one metal element selected from the group consisting of nickel and copper;
a molar composition ratio of manganese to oxygen is from 1:1.8 to 1:2.2;
a molar composition ratio of the metal element A to manganese is from 1:1.7 to 1:2.3; and
in an X-ray diffraction pattern obtained by X-ray diffraction measurement using a Cu-Kα ray, the metal oxide has an intensity ratio (I_{18°}/I_{37°}) of 0.2 or more between a peak having a 2θ value in a range of from 16° to 20° (P_{18°}) and a peak having a 2θ value in a range of from 35° to 39° (P_{37°}).

2. The metal oxide according to claim 1, wherein in the X-ray diffraction pattern obtained by X-ray diffraction measurement using a Cu-Kα ray, the metal oxide has a full width at half maximum (FWHM) of the peak (P_{18°}) having the 2θ value in the range of from 16 to 20 degrees of from 1.0° to 7.0°.

3. The metal oxide according to claim 1 or 2, having an average particle size of from 1 to 10 nm.

4. The metal oxide according to any one of claims 1 to 3, comprising a compound represented by Formula (1):
AMn₂O₄ (1)
where in Formula (1), A is at least one selected from the group consisting of Ni and Cu, which is the same as the metal element A.

5. A method for producing the metal oxide described in any one of claims 1 to 4, the method comprising:
a first step of preparing a mixed solution comprising a permanganate salt, a metal salt of the metal element A, and an alcohol; and
a second step of stirring and reacting the mixed solution obtained in the first step at a temperature equal to or lower than a boiling point of the alcohol,
wherein the A is at least one metal element selected from the group consisting of nickel and copper; and
a molar ratio in terms of a metal element between a charged amount of the metal salt of the metal element A and a charged amount of the permanganate salt (A:Mn) is from 1:1.7 to 1:2.3.

6. A method for producing a metal oxide, the metal oxide comprising a metal element A, manganese, and oxygen and having a spinel-type crystal structure, the method comprising:
a first step of preparing a mixed solution comprising a permanganate salt, a metal salt of the metal element A, and an alcohol; and
a second step of stirring and reacting the mixed solution obtained in the first step at a temperature equal to or lower than a boiling point of the alcohol,
wherein the A is at least one metal element selected from the group consisting of nickel and copper; and
a molar ratio in terms of a metal element between a charged amount of the metal salt of the metal element A and a charged amount of the permanganate salt (A:Mn) is from 1:1.7 to 1:2.3.

7. The method for producing a metal oxide according to claim 5 or 6, wherein the permanganate salt is tetrabutylammonium permanganate; and
the metal salt is at least one selected from the group consisting of nickel chloride and copper chloride.

8. The method for producing a metal oxide according to any one of claims 5 to 7, further comprising:
a third step of obtaining a precursor of the metal oxide by filtering a reaction solution obtained in the second step; and
a fourth step of heat-treating the precursor obtained in the third step at a temperature of 20°C or higher and 300°C or lower.

9. A metal oxide obtained by using the method for producing a metal oxide described in claim 6.

10. A carbon dioxide reduction catalyst comprising the metal oxide described in any one of claims 1 to 4 and 9.

11. A carbon dioxide reduction method for reducing carbon dioxide using the metal oxide described in any one of claims 1 to 4 and 9 as a catalyst,
wherein a reaction temperature in the carbon dioxide reduction reaction is 300°C or lower.

12. A carbon dioxide reduction apparatus for reducing carbon dioxide, comprising:
an introduction unit for carbon dioxide;
a reaction unit comprising a carbon dioxide reduction catalyst; and
a heating unit configured to heat the reaction unit;
wherein the carbon dioxide reduction catalyst comprises the metal oxide described in any one of claims 1 to 4 and 9.
